# EUROPEAN PATENT SPECIFICATION

(11) **EP 4 241 419 B1**
(45) Date of publication and mention of the grant of the patent: **07.10.2026**
(21) Application number: 21755216.5
(22) Date of filing: 21.07.2021
(51) Int. Cl.: H04L 9/40, H04W 12/08, H04L 9/32, H04L 47/22, H04L 47/32, H04L 47/70

(54) **METHODS, SYSTEMS, AND COMPUTER READABLE MEDIA FOR INGRESS MESSAGE RATE LIMITING**
VERFAHREN, SYSTEME UND COMPUTERLESBARE MEDIEN ZUR BEGRENZUNG DER RATE VON EINGANGSNACHRICHTEN
PROCÉDÉS, SYSTÈMES ET SUPPORTS LISIBLES PAR ORDINATEUR POUR UNE LIMITATION DE DÉBIT DE MESSAGE D'ENTRÉE

(30) Priority: 06.11.2020 IN 202041048552; 13.11.2020 IN 202041049614; 21.12.2020 US 202017129487; 28.12.2020 US 202017134635
(43) Date of publication of application: 13.09.2023
(73) Proprietor: Oracle International Corporation, Redwood Shores, CA 94065 (US)
(72) Inventor: RAJPUT, Jay, Bangalore, Karnataka 560103 (IN); MAHALANK, Shashikiran, Bhalachandra, Bangalore 560076 (IN); JAIN, Amit, Bangalore 560067 (IN)
(74) Representative: Gill Jennings & Every LLP
(86) International application number: PCT/US2021/042660
(87) International publication number: WO 2022/098404

(56) References cited:
- US-B2- 9 106 769
- "3rd Generation Partnership Project; Technical Specification Group Services and System Aspects; Security Aspects; Study on security aspects of the 5G Service Based Architecture (SBA) (Release 16)", 16 November 2018 (2018-11-16), XP051499895, Retrieved from the Internet <URL:http://www.3gpp.org/ftp/tsg%5Fsa/WG3%5FSecurity/TSGS3%5F93%5FSpokane/Docs/S3%2D183724%2Ezip> [retrieved on 20181116]
- NOKIA ET AL: "SBA Network Function certificate profile", vol. SA WG3, no. 20200302 - 20200306, 21 February 2020 (2020-02-21), XP051855154, Retrieved from the Internet <URL:https://ftp.3gpp.org/tsg_sa/WG3_Security/TSGS3_98e/Docs/S3-200421.zip S3-200421_draftCR_33310_was_S3-194524_SBA NF Certificate profile v4_final.doc> [retrieved on 20200221]
- NOKIA ET AL: "3gpp-Sbi-Consumer-Id", vol. CT WG4, no. E-Meeting; 20201103 - 20201113, 26 October 2020 (2020-10-26), XP051947263, Retrieved from the Internet <URL:https://ftp.3gpp.org/tsg_ct/WG4_protocollars_ex-CN4/TSGCT4_101e_meeting/Docs/C4-205235.zip C4-205235 CR 29500-h00 429 Too Many Requests.docx> [retrieved on 20201026]
- "3 Generation Partnership Project; Technical Specification Group Services and System Aspects; Security architecture and procedures for 5G system (Release 16)", vol. SA WG3, no. V16.3.0, 10 July 2020 (2020-07-10), pages 1 - 248, XP051924931, Retrieved from the Internet <URL:ftp://ftp.3gpp.org/Specs/archive/33_series/33.501/33501-g30.zip 33501-g30.doc> [retrieved on 20200710]

## Description

### PRIORITY CLAIM

This application claims the priority benefit of U.S. Patent Application Serial No. 17/134,635, filed December 28, 2020, U.S. Patent Application Serial No. 17/129,487, filed December 21, 2020, Indian Provisional Patent Application Serial No. 202041049614, filed November 13, 2020, and Indian Provisional Patent Application Serial No. 202041048552, filed November 6, 2020.

### TECHNICAL FIELD

The subject matter described herein relates to enhancing security in 5G communication networks. More particularly, the subject matter described herein relates to methods, systems, and computer readable media for ingress message rate limiting.

### BACKGROUND

In 5G telecommunications networks, the network node that provides service is referred to as a producer network function (NF). A network node that consumes services is referred to as a consumer NF. A network function can be both a producer NF and a consumer NF depending on whether it is consuming or providing service.

A given producer NF may have many service endpoints, where a service endpoint is the point of contact for one or more NF instances hosted by the producer NF. The service endpoint is identified by a combination of Internet protocol (IP) address and port number or a fully qualified domain name that resolves to an IP address and port number on a network node that hosts a producer NF. An NF instance is an instance of a producer NF that provides a service. A given producer NF may include more than one NF instance. It should also be noted that multiple NF instances can share the same service endpoint.

Producer NFs register with a network function repository function (NRF). The NRF maintains service profiles of available NF instances identifying the services supported by each NF instance. Consumer NFs can subscribe to receive information about producer NF instances that have registered with the NRF. In addition to consumer NFs, another type of network node that can subscribe to receive information about NF service instances is a service communication proxy (SCP). The SCP subscribes with the NRF and obtains reachability and service profile information regarding producer NF service instances. Consumer NFs connect to the SCP, and the SCP load balances traffic among producer NF service instances that provide the required service or directly routes the traffic to the destination producer NF instance.

In addition to the SCP, other examples of intermediate proxy nodes or groups of network nodes that route traffic between producer and consumer NFs include the security edge protection proxy (SEPP), the service gateway, and nodes in the 5G service mesh. The SEPP is the network node used to protect control plane traffic that is exchanged between different 5G public land mobile networks (PLMNs). As such, the SEPP performs message filtering, policing, and topology hiding for all application programming interface (API) messages.

However, there exists a need for improved security measures at one or more NFs.

3rd Generation Partnership Project; Technical Specification Group Services and System Aspects; Security Aspects; Study on security aspects of the 5G Service Based Architecture (SBA) (Release 16), XP051499895 discloses a review of the interactions in the 5G service based architecture, determines key issues relating to the security of SBA elements and interfaces, and details potential solutions and recommends normative work for releases 15 and 16.

US 9,106,769 B2 discloses a method for congestion management in a Diameter signaling network. The method occurs a Diameter routing node.

### SUMMARY

Methods, systems, and computer readable media for ingress message rate limiting are disclosed. The invention is set out in the appended claims. One example method for ingress message rate limiting occurs at a first network node of a first network comprises: obtaining, from a transport layer security (TLS) message from a second network node of a second network, an identifier identifying the second network node or the second network; receiving, on an N32-f interface connection, a request message from the second network node or the second network; determining, using the identifier, that an allowed ingress message rate associated with the second network node or the second network has been reached or exceeded, wherein determining, using the identifier, that the allowed ingress message rate associated with the second network node or the second network has been exceeded includes querying a data store or database that contains current ingress message rates and allowed message rates associated with different network or node identifiers; and in response to determining that the allowed ingress message rate associated with the second network node or the second network has been reached or exceeded, performing a rate limiting action.

One example system for ingress message rate limiting includes a first network node of a first network comprising at least one processor and a memory. The first node is configured for: obtaining, from a transport layer security (TLS) message from a second network node of a second network, an identifier identifying the second network node or the second network; receiving, on an N32-f interface connection, a request message from the second network node or the second network; determining, using the identifier, that an allowed ingress message rate associated with the second network node or the second network has been reached or exceeded, wherein determining, using the identifier, that the allowed ingress message rate associated with the second network node or the second network has been exceeded includes querying a data store or database that contains current ingress message rates and allowed message rates associated with different network or node identifiers; and in response to determining that the allowed ingress message rate associated with the second network node or the second network has been reached or exceeded, performing a rate limiting action.

One example non-transitory computer readable medium comprising computer executable instructions embodied in the non-transitory computer readable medium that when executed by at least one processor of at least one computer cause the at least one computer to perform steps comprising: at a first network node of a first network: obtaining, from a transport layer security (TLS) message from a second network node of a second network, an identifier identifying the second network node or the second network; receiving, on an N32-f interface connection, a request message from the second network node or the second network; determining, using the identifier, that an allowed ingress message rate associated with the second network node or the second network has been reached or exceeded, wherein determining, using the identifier, that the allowed ingress message rate associated with the second network node or the second network has been exceeded includes querying a data store or database that contains current ingress message rates and allowed message rates associated with different network or node identifiers; and in response to determining that the allowed ingress message rate associated with the second network node or the second network has been reached or exceeded, performing a rate limiting action.

According to an aspect of the subject matter described herein, obtaining an identifier from a TLS message may include obtaining the identifier from a certificate (e.g., an X.509v3 certificate) contained in the TLS message. For example, an X.509v3 certificate in a TLS message may include a subject field or a subject alternative name field that includes a FQDN associated with an identity of the sender. In this example, the FQDN may include or represent a network node identifier or a network identifier, e.g., the network identifier may be stored in a format like "5gc.mnc<MNC>.mcc<MCC>.3gppnetwork.org", where "<MNC>" and "<MCC>" fields correspond to the MNC and MCC of an operator's PLMN.

According to an aspect of the subject matter described herein, determining that an allowed ingress message rate associated with a second network node or a second network has been reached or exceeded may comprise obtaining the allowed ingress message rate associated with the second network node or the second network; obtaining a current ingress message rate associated with the second network node or the second network; and comparing the current ingress message rate and the allowed ingress message rate for determining that the current ingress message rate meets or exceeds the allowed ingress message rate.

According to an aspect of the subject matter described herein, obtaining a current ingress message rate associated with a second network node or a second network may include tracking or deriving messages rates for a plurality of SEPPs in the second network to determine the current ingress rate associated with the second network. For example, assuming rate limiting is based on an originating network identifier, SEPP **126** may track ingress message rates across a plurality of N32-f interface connections and may combine ingress messages rates for a plurality of SEPPs associated with a same network identifier and may compare the combined ingress message rate associated with the network identifier to a predetermined allowed ingress message rate associated with the network identifier.

According to an aspect of the subject matter described herein, a rate limiting action may include discarding a request message, generating or modifying a throttle rate for discarding a portion of messages, or notifying a network operator or a management system.

The subject matter described herein may be implemented in hardware, software, firmware, or any combination thereof. As such, the terms "function" "node" or "module" as used herein refer to hardware, which may also include software and/or firmware components, for implementing the feature being described. In one example implementation, the subject matter described herein may be implemented using a computer readable medium having stored thereon computer executable instructions that when executed by the processor of a computer control the computer to perform any one or more steps of the invention. Example computer readable media suitable for implementing the subject matter described herein include non-transitory computer-readable media, such as disk memory devices, chip memory devices, programmable logic devices, and application specific integrated circuits. In addition, a computer readable medium that implements the subject matter described herein may be located on a single device or computing platform or may be distributed across multiple devices or computing platforms.

### BRIEF DESCRIPTION OF THE DRAWINGS

The subject matter described herein will now be explained with reference to the accompanying drawings of which:
Figure 1 is a network diagram illustrating an example 5G network architecture;
Figure 2 is a diagram illustrating N32-f interface connections using transport layer security (TLS);
Figure 3 is a diagram illustrating an example node for ingress message rate limiting;
Figure 4 is a message flow diagram illustrating a TLS handshake associated with an N32-f interface;
Figure 5 is a diagram illustrating example message rate related data;
Figure 6 is a message flow diagram illustrating an example of ingress message rate limiting; and
Figure 7 is a flow chart illustrating an example process for ingress message rate limiting.

### DETAILED DESCRIPTION

Reference will now be made in detail to various embodiments of the subject matter described herein, examples of which are illustrated in the accompanying drawings. Wherever possible, the same reference numbers will be used throughout the drawings to refer to the same or like parts.

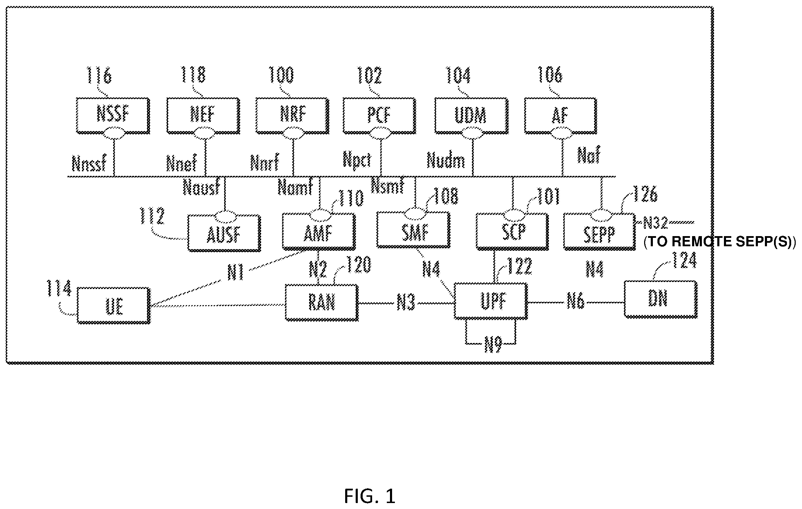

Figure 1 is a block diagram illustrating an example 5G system network architecture, e.g., a home 5G core (5GC) network. The architecture in Figure 1 includes NRF **100** and SCP **101,** which may be located in the same home public land mobile network (PLMN). As described above, NRF **100** may maintain profiles of available producer NF service instances and their supported services and allow consumer NFs or SCPs to subscribe to and be notified of the registration of new/updated producer NF service instances. SCP **101** may also support service discovery and selection of producer NF instances. SCP **101** may perform load balancing of connections between consumer and producer NFs. In addition, using the methodologies described herein, SCP **101** may perform preferred NF location based selection and routing.

NRF **100** is a repository for NF or service profiles of producer NF instances. In order to communicate with a producer NF instance, a consumer NF or an SCP must obtain the NF or service profile or the producer NF instance from NRF 100. The NF or service profile is a JavaScript object notation (JSON) data structure defined in Third Generation Partnership Project (3GPP) Technical Specification (TS) 29.510. The NF or service profile definition includes at least one of a fully qualified domain name (FQDN), an Internet protocol (IP) version 4 (IPv4) address or an IP version 6 (IPv6) address. In Figure 1, any of the nodes (other than NRF 100) can be either consumer NFs or producer NFs, depending on whether they are requesting or providing services. In the illustrated example, the nodes include a policy control function (PCF) **102** that performs policy related operations in a network, a unified data management (UDM) function **104** that manages user data, and an application function (AF) **106** that provides application services. The nodes illustrated in Figure 1 further include a session management function (SMF) **108** that manages sessions between access and mobility management function (AMF) **110** and PCF 102. AMF **110** performs mobility management operations similar to those performed by a mobility management entity (MME) in 4G networks. An authentication server function (AUSF) **112** performs authentication services for user equipment (UEs), such as user equipment (UE) **114,** seeking access to the network.

A network slice selection function (NSSF) **116** provides network slicing services for devices seeking to access specific network capabilities and characteristics associated with a network slice. A network exposure function (NEF) **118** provides application programming interfaces (APIs) for application functions seeking to obtain information about Internet of things (IoT) devices and other UEs attached to the network. NEF **118** performs similar functions to the service capability exposure function (SCEF) in 4G networks.

A radio access network (RAN) **120** connects user equipment (UE) **114** to the network via a wireless link. Radio access network **120** may be accessed using a g-Node B (gNB) (not shown in Figure 1) or other wireless access point. A user plane function (UPF) **122** can support various proxy functionality for user plane services. One example of such proxy functionality is multipath transmission control protocol (MPTCP) proxy functionality. UPF **122** may also support performance measurement functionality, which may be used by UE **114** to obtain network performance measurements. Also illustrated in Figure 1 is a data network (DN) **124** through which UEs access data network services, such as Internet services.

Security edge protection proxy (SEPP) **126** filters incoming traffic from another PLMN and performs topology hiding for traffic exiting the home PLMN. SEPP **126** may communicate with an SEPP in a foreign PLMN which manages security for the foreign PLMN. Thus, traffic between NFs in different PLMNs may traverse two SEPP functions, one for the home PLMN and the other for the foreign PLMN.

SEPP **126** may utilize an N32-c interface and an N32-f interface. An N32-c interface is a control plane interface between two SEPPs usable for performing an initial handshake (e.g., a TLS handshake) and negotiating various parameters for an N32-f interface connection and related message forwarding. An N32-f interface is a forwarding interface between two SEPPs usable for forwarding various communications (e.g., 5GC requests) between a consumer NF and a producer NF after applying application level security protection.

Generally, an N32-f interface connection between SEPPs utilizes a TLS protection mode, but may use a PRINS based protection mode if there are one or more IP exchanges between the SEPPS. While an N32-f context identifier is created as part of the handshake procedure when setting up an N32-f interface connection using a PRINS based protection mode, no N32-f context identifier is created when setting up an N32-f interface connection using a TLS protection mode. Further, forwarded messages sent via an N32-f interface connection using a TLS protection mode are HTTP/2 messages and may not include a source SEPP identity.

One potential issue with the existing 5G architecture is that a SEPP in a foreign PLMN can trigger a signaling storm by sending a significant number of inter-PLMN messages to another SEPP in a home PLMN. While the receiving SEPP or the home PLMN can initiate a global message rate limiting procedure to reduce or mitigate consequences of the signaling storm, global message rate limiting can discard messages from networks and SEPPS that are not responsible for or associated with the signaling storm.

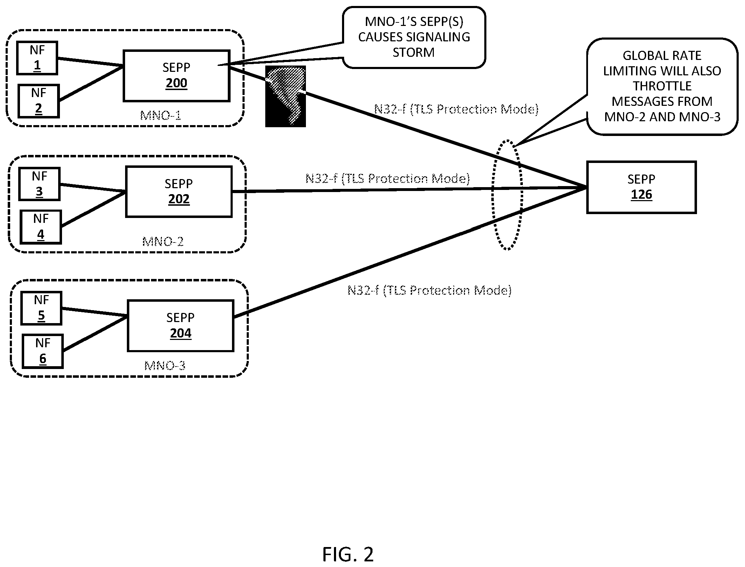

Figure 2 is a diagram illustrating N32-f interface connections using TLS. In Figure 2, SEPP **126** may be connected to various SEPPs in networks controlled by different mobile network operators (MNOs). As depicted in Figure 2, SEPP **126** is connected to SEPP **200** in an 'MNO-1' network via an N32-f interface connection using a TLS protection mode. SEPP **126** is connected to SEPP **202** in an 'MNO-2' network via an N32-f interface connection using a TLS protection mode. SEPP **126** is connected to SEPP **204** in an 'MNO-3' network via an N32-f interface connection using a TLS protection mode.

In some embodiments, SEPP **126** may include functionality defined in 3GPP TS 33.501, e.g., message protection, mutual authentication, key management, topology hiding, access control, discard malformed N32 signaling messages, rate limiting, anti-spoofing mechanism. For example, when SEPP **200** and/or other SEPPs in the 'MNO-1' network are sending a significant amount of traffic (e.g., a signaling storm) such that network congestion and/or other issues are experienced by SEPP **126** or nodes in its home network, SEPP **126** may implement a global message rate limiting procedure which may throttle or discard ingress messages in an effort to reduce a global ingress message rate. However, such a procedure is generally indiscriminate with regard to which network's messages are throttled or discarded.

While global message rate limiting can mitigate negative effects of a signaling storm, such rate limiting may also unfairly discard or throttle traffic associated with networks (e.g., 'MNO-2' and 'MNO-3' networks) that are not responsible for or associated with the signaling storm.

Effective identifiers for performing selective ingress message rate limiting may not be readily available depending on a variety of factors. For example, while N32-f context IDs can be used for N32-f interface connections that use PRINS based protection, such IDs are not available for N32-f interface connections that use TLS protection. Further, while sender identifiers may potentially be parsed or derived from individual inter-PLMN messages, HTTP/2 messages that typically traverse N32-f interface connections that use TLS protection may not include a source SEPP identity and using source IP addresses can be cumbersome because of network address translation and multiple SEPP instances and/or connections. Moreover, a rate limiting solution requiring such parsing may be resource intensive, lack scalability, and/or be otherwise undesirable.

The subject matter described herein addresses such issues by providing methods or techniques for efficient and selective ingress message rate limiting per PLMN or node therein, e.g., by discarding excessive inter-PLMN messages only from a culprit network. Further, such methods and techniques can perform ingress message rate limiting of inter-PLMN messages with little to no additional overhead and can also avoid parsing inter-PLMN messages for a PLMN identifier. For example, an ingress message rate limiting method or technique described herein may obtain an origination or sender identifier (e.g., a FQDN or a network domain identifier) from a TLS message or an X.509 certificate received during a handshake procedure and then rate limit ingress messages based on that identifier.

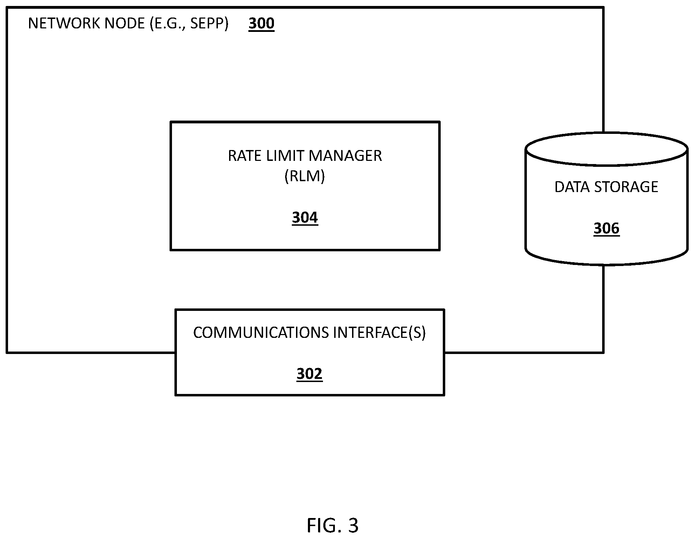

Figure 3 is a diagram illustrating an example node 300 for ingress message rate limiting. Node 300 may represent any suitable entity or entities for performing aspects of ingress message rate limiting. In some embodiments, node 300 may represent or include one or more 5GC NFs, e.g., a SEPP, an NRF, a PCF, an NSSF, an NEF, a UDM, an AUSF, a UDR, a binding support function (BSF), or an unstructured data storage function (UDSF). In some embodiments, node **300** may represent or include a network gateway, a network proxy, an edge security device, or related functionality.

In some embodiments, node **300** or a related module may be configured (e.g., via programming logic) to perform ingress message rate limiting on inter-PLMN messages based on their originating PLMN, thereby reducing or mitigating the impact of control plane signaling storms on the node or other downstream NFs in the home network. For example, node **300** or a related module may be configured to identify a PLMN ID from a digital certificate received during a TLS handshake and may then rate limit ingress messages associated with the PLMN ID.

Referring to Figure 3, node **300** may include one or more communications interface(s) **302** for communicating messages via a communications environment, e.g., a home 5GC network. In some embodiments, communications interface(s) **302** may include a first communication interface for communicating with one or more SEPPs in a first network, a second communications interface for communicating with one or more SEPPs in a second network, and a third communications interface for communicating with one or more SEPPs in a home network, e.g., a home 5GC network.

Node **300** may include a rate limit manager (RLM) 304. RLM **304** may be any suitable entity (e.g., software executing on at least one processor) for performing one or more aspects of ingress message rate limiting. In some embodiments, RLM **304** may include functionality for obtaining, from a TLS message from a network node, an identifier identifying the network node or a related network and using the identifier to perform ingress message rate limiting. For example, obtaining an identifier from a TLS message may include obtaining the identifier from a certificate (e.g., an X.509v3 certificate) contained in the TLS message. In this example, an X.509v3 certificate in a TLS message may include a subject field or a subject alternative name field that includes a FQDN associated with an identity of the sender. In this example, the FQDN may include or represent a network node identifier or a network identifier, e.g., the network identifier may be a PLMN ID or a network domain stored in a format like "5gc.mnc<MNC>.mcc<MCC>.3gppnetwork.org", where "<MNC>" and "<MCC>" fields correspond to the MNC and MCC of an operator's PLMN.

In some embodiments, e.g., after determining an identifier associated with a particular N32-f interface connection, RLM **304** may be configured for monitoring the N32-f interface connection for inter-PLMN messages (e.g., HTTP/2 messages). In this example, for each received inter-PLMN message, RLM **304** may determine, using the identifier, whether an allowed ingress message rate associated with the identifier has been reached or exceeded and in response to determining that the allowed ingress message rate associated with the identifier has been reached or exceeded, RLM **304** may perform a rate limiting action. Example rate limiting actions may include discarding a request message, generating or modifying a throttle rate for discarding a portion of ingress messages, and/or notifying a network operator or a management system regarding an ingress message rate or related event.

In some embodiments, RLM **304** may be configured for determining whether to perform ingress message rate limiting by obtaining an allowed ingress message rate associated with a network node or a network containing the network node; obtaining a current ingress message rate associated with the network node or the network; and comparing the current ingress message rate and the allowed ingress message rate. If the current ingress message rate meets or exceeds the allowed ingress message rate, then a rate limiting action may be performed. If the current ingress message rate meets or exceeds the allowed ingress message rate, then RLM **304** may allow the message to be handled or processed, e.g., without ingress message rate limiting.

In some embodiments, RLM **304** may be configured for tracking or deriving messages rates for a plurality of nodes or related connections. For example, assuming rate limiting is based on an originating network identifier, RLM **304** may track ingress message rates across a plurality of N32-f interface connections and may combine ingress messages rates for a plurality of SEPPs associated with a same network identifier and may compare the combined ingress message rate associated with the network identifier to a predetermined allowed ingress message rate associated with the network identifier.

Node **300** may access (e.g., read from and/or write information to) data storage **306.** Data storage **306** may be any suitable entity (e.g., a computer readable medium or memory) for storing various data. In some embodiments, data storage **306** may include logic for obtaining identifiers for TLS messages and/or digital certificates, logic for checking whether to perform ingress message rate limiting, logic for implementing or triggering a rate limiting action, logic for tracking current ingress message rates associated with various connections (e.g., N32-f interface connections) and/or originating entities (e.g., PLMN IDs or FQDNs), and predetermined allowed message rates for one or more foreign networks and/or nodes therein.

In some embodiments, data storage **306** may include message rate limiting data. For example, data storage **306** may include information for identifying a current message rate, an allowed message rate, and/or a message throttle rate for various PLMNs or network nodes therein. In this example, related message rates and throttle rates may be indexed or otherwise identified using an identifier obtained from a TLS message or an X.509 certificate therein.

It will be appreciated that Figure 3 and its related description are for illustrative purposes and that node **300** may include additional and/or different modules, components, or functionality.

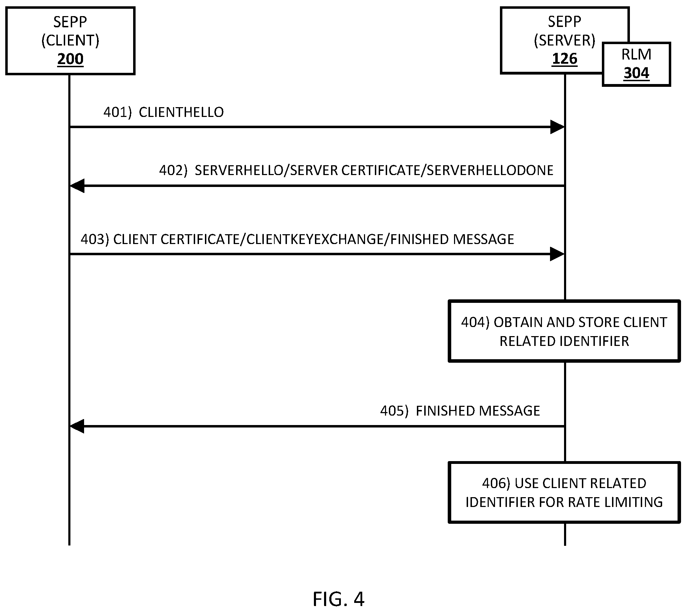

Figure 4 is a message flow diagram illustrating a TLS handshake associated with setting up an N32-f interface connection between SEPP **200** and SEPP **126.** In some embodiments, SEPP **126** or RLM **304** therein may be configured to obtain or determine an identifier associated with an initiating SEPP **200** when setting up or configuring an N32-f interface connection. For example, initiating SEPP **200** and responding SEPP **126** may exchange TLS handshake messages over an N32-c interface to establish a TLS connection. The TLS handshake may involve the exchange of ClientHello and ServerHello messages followed by the exchange of certificate messages. Each certificate message may contain the X.509 certificate of the sender. The identity of the sender may be contained in the X.509 certificate and is difficult to spoof because the X.509 certificate is signed by a certificate authority.

The TLS handshake protocol is defined in Internet Engineering Task Force (IETF) Request for Comments (RFC) 5246 and includes the exchange of certificate messages by both ends of the TLS connection. The structure of a TLS handshake message defined in IETF RFC 5246, including the certificate message, appears below:

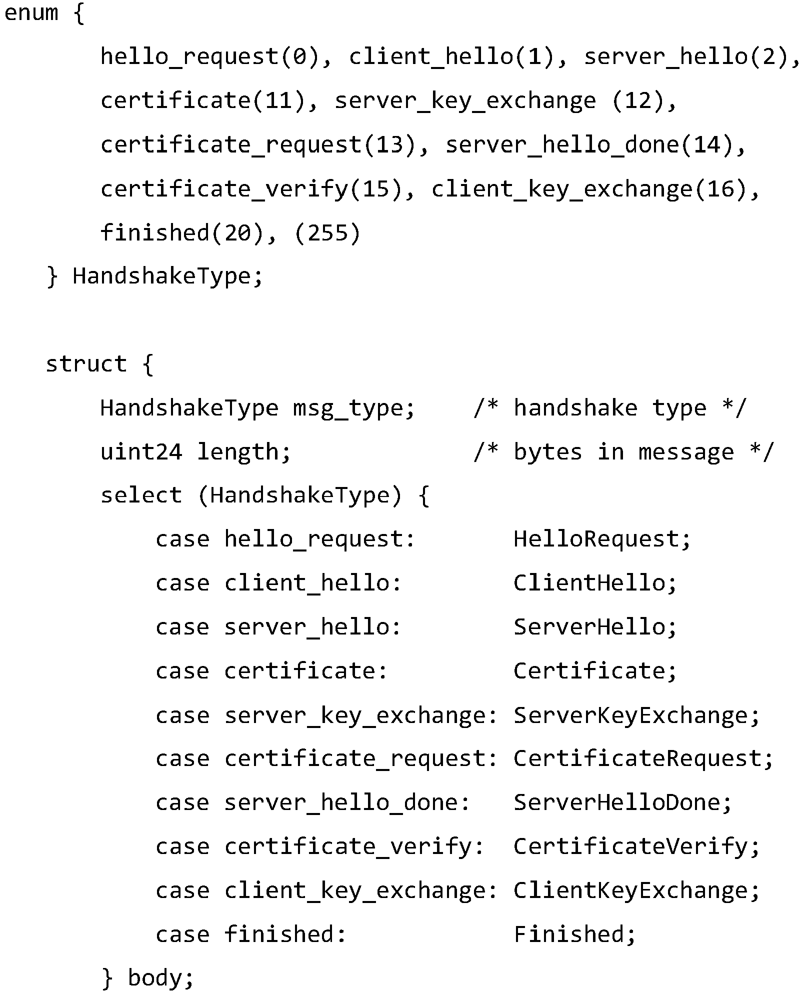

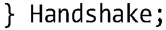

As illustrated by the TLS handshake message structure described above, one of the defined handshake message types is the certificate message, which contains the certificate of the client or server, depending on whether the sender is functioning as a client or a server. In establishing secure TLS communications over the N32-c interface, mutual TLS or m-TLS is used where both ends of the TLS connection receive and validate the other end's X.509 certificate. IETF RFC 5246 indicates that the type of certificate must be X.509v3 unless expressly negotiated otherwise. The examples described herein used the X.509v3 certificate as an example, but the subject matter described herein is not limited to only using the identity of the sender extracted from an X.509v3 to validate an N32-c identity of a sender. The X.509v3 certificate format is defined in IETF RFC 3280. According to IETF RFC 3280, one extension or parameter that may be included in an X.509v3 certificate is the subject alternative names extension. The subject alternative names extension is defined as follows:
The subject alternative names extension allows additional identities to be bound to the subject of the certificate. Defined options include an Internet electronic mail address, a DNS name, an IP address, and a uniform resource identifier (URI). Other options exist, including completely local definitions. Multiple name forms,
and multiple instances of each name form, MAY be included. Whenever such identities are to be bound into a certificate, the subject alternative name (or issuer alternative name) extension MUST be used; however, a DNS name MAY be represented in the subject field using the domainComponent attribute as described in section 4.1.2.4.
Because the subject alternative name is considered to be definitively bound to the public key, all parts of the subject alternative name MUST be verified by the CA.

In some embodiments, as indicated above, a subject alternative names extension of an X.509v3 certificate may contain a DNS name, IP address, or a URI that identifies the subject of the certificate and that is verified by the certificate authority. Because the subject alternative name is verified by the certificate authority, the subject alternative name is difficult to spoof.

Referring to Figure 4, in step **401,** a ClientHello message for initiating a TLS handshake may be sent from SEPP **200** to SEPP 126.

In step **402,** e.g., in response a ClientHello message, various handshake related messages (e.g., a ServerHello message, a Certificate message, a ServerKeyExchange message, a CertificateRequest message, and a ServerHelloDone message) may be sent from SEPP **126** to SEPP 200.

In step **403,** e.g., in response to ServerHelloDone message, various handshake related messages (e.g., a Certificate message, a ClientKeyExchange message, a CertificateVerify message, a ChangeCipherSpec message, and a Finished message) may be sent from SEPP **200** to SEPP 126.

In step **404,** a client related identifier from a Certificate message may be extracted and stored, e.g., data storage 306. For example, SEPP **126** or RLM **304** therein may extract or derive a relevant identifier from an FQDN stored in an X.509v3 certificate of a Certificate message. In this example, the FQDN may include or represent a network node identifier or a network identifier, e.g., the network identifier may be stored in a format like "5gc.mnc<MNC>.mcc<MCC>.3gppnetwork.org", where "<MNC>" and "<MCC>" fields correspond to the MNC and MCC of an operator's PLMN.

In step **405,** e.g., in response a Finished message, various handshake related messages (e.g., a ChangeCipherSpec message, and a Finished message) may be sent from SEPP **126** to SEPP **200.**

In step **406,** after identifying a client related identifier (e.g., PLMN ID) associated with an N32-f interface connection, SEPP **126** or RLM **304** therein may monitor inter-PLMN messages (e.g., HTTP/2 messages) received via the N32-f interface connection for ingress message rate limiting purposes. For example, when an HTTP/2 request message associated with a particular PLMN ID is received via an N32-f interface connection, SEPP **126** or RLM **304** therein may determine whether a current message rate associated with the client related identifier meets or exceeds an allowed message rate associated with the client related identifier before processing, forwarding, and/or responding to the inter-PLMN messages.

It will be appreciated that Figure 4 is for illustrative purposes and that different and/or additional messages and/or actions may be used. It will also be appreciated that various messages and/or actions described herein may occur in a different order or sequence.

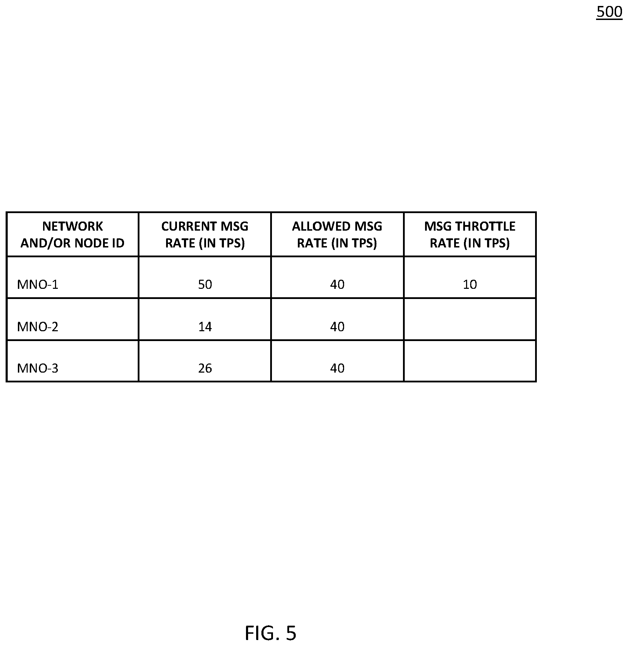

Figure 5 is a diagram that depicts example message rate related data 500. Data **500** may include information for identifying a current message rate, an allowed message rate, and/or a message throttle rate for various PLMNs or network nodes therein. For example, each rate in data **500** may represent a number of messages, requests, or transactions per a time period, e.g., transactions per second (TPS).

Referring to Figure 5, a table representing data **500** comprises columns and/or fields for network and/or node IDs, current message rates, allowed message rates, and message throttle rate. A NET ID field may store information for representing a PLMN. An example network ID may include a PLMN identifier, a mobile country code (MCC) a mobile network code (MNC), a location area code (LAC), a network identifier, a cell global identifier (CGI), a base station identifier (BSID), an access node identifier, a cell identity (CI), a service area code (SAC), a routing area identity (RAI), a routing area code (RAC), a tracking area identity (TAI), a tracking area code (TAC), an eUTRAN CGI (EGCI), location coordinates (e.g., global positioning system (GPS) information), and/or relative location information. An example node ID may include a FQDN, a URI, a domain name system (DNS) name, or an IP address.

A current message rate field may store information for representing a measured or tracked message rate associated with one or more messages, types of messages, or transactions. For example, a current message rate (e.g., 50 TPS) may indicate a measured rate of inter-PLMN request messages or transactions received from a particular PLMN.

An allowed message rate field may store information for representing a predetermined allowed message rate associated with one or more messages, types of messages, or transactions. For example, an allowed message rate (e.g., 40 TPS) may indicate a rate of inter-PLMN request messages or transactions from a particular PLMN that SEPP **126** is configured to allow, e.g., without performing a rate limiting action.

A message throttle rate field may store information for representing a message throttle rate associated with one or more messages, types of messages, or transactions. For example, a message throttle rate may indicate a rate of inter-PLMN request messages or transactions from a particular PLMN that SEPP **126** is to throttle or discard. In this example, a throttle rate may be based on the difference between a current message rate and an allowed message rate, e.g., 50 TPS - 40 TPS = 10 TPS.

It will also be appreciated that data **500** is for illustrative purposes and that different and/or additional data than the data depicted in Figure 5 may be usable for indicating default values for particular data portions or other information. Further, data **500** may be stored (e.g., in data storage **306)** or managed using various data structures and/or computer readable media.

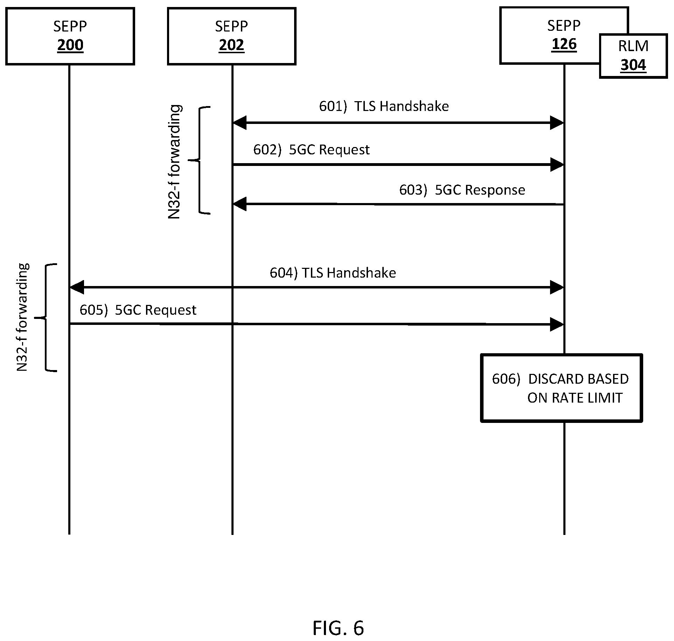

Figure 6 is a message flow diagram illustrating an example of ingress message rate limiting. In some embodiments, SEPP **126** or RLM **304** therein may be configured to perform ingress message rate limiting using an identifier associated with an initiating SEPP obtained or derived from a TLS based certificate exchanged when setting up or configuring an N32-f interface connection. After identifying a sender identifier (e.g., PLMN ID) associated with an N32-f interface connection, SEPP **126** or RLM **304** therein may monitor ingress inter-PLMN messages (e.g., an HTTP/2 messages) associated with the sender identifier and may determine whether a current message rate associated with the sender identifier meets or exceeds an allowed message rate associated with the sender identifier before processing, forwarding, and/or responding to the inter-PLMN messages. If SEPP **126** or RLM **304** determines that the current message rate meets or exceeds the allowed message rate, then SEPP **126** or RLM **304** therein may discard one or more of the inter-PLMN messages or may perform another rate limiting action. If SEPP **126** or RLM **304** therein determines that the current message rate does not meet or exceed the allowed message rate, then SEPP **126** or RLM **304** therein may allow the inter-PLMN messages.

Referring to Figure 6, in step **601,** a TLS handshake between SEPP **202** and SEPP **126** may occur via an N32-c interface. For example, SEPP **202** may initiate a TLS handshake with SEPP **126** and, during the TLS handshake, SEPP **202** and SEPP **126** may exchange digital certificates (e.g., X.509v3 certificate) containing identifiers.

In some embodiments, during a TLS handshake, SEPP **126** or RLM **304** therein may receive a digital certificate containing a identity associated with SEPP **202.** In such embodiments, SEPP **126** or RLM **304** therein may extract, derive, or otherwise determine an identifier from the digital certificate and use that identifier for ingress message rate limiting functions.

In step **602,** after the TLS handshake, an 5GC request (e.g., an HTTP/2 message) may be sent from SEPP **202** to SEPP **126** via an N32-f interface using a TLS protection mode. For example, a producer NF in a foreign network may generate an 5GC request that is forwarded to a consumer NF in another network via SEPP **202** and SEPP **126.**

In step **603,** e.g., after determining that rate limiting is not to be performed, an 5GC response (e.g., an HTTP/2 message) may be sent from SEPP **126** to SEPP **202** via the N32-f interface. For example, a consumer NF in a home network may generate an 5GC response that is forwarded to a producer NF in a foreign network via SEPP **126** and SEPP 202.

In step **604,** a TLS handshake between SEPP **200** and SEPP **126** may occur via an N32-c interface For example, SEPP **200** may initiate a TLS handshake with SEPP **126** and, during the TLS handshake, SEPP **200** and SEPP **126** may exchange digital certificates (e.g., X.509v3 certificate) containing identifiers.

In some embodiments, during a TLS handshake, SEPP **126** or RLM **304** therein may receive a digital certificate containing a identity associated with SEPP **200.** In such embodiments, SEPP **126** or RLM **304** therein may extract, derive, or otherwise determine an identifier from the digital certificate and use that identifier for ingress message rate limiting purposes.

In step **605,** after the TLS handshake, an 5GC request (e.g., an HTTP/2 message) may be sent from SEPP **200** to SEPP **126** via an N32-f interface using a TLS protection mode. For example, a producer NF in a foreign network may generate an 5GC request that is forwarded to a consumer NF in another network via SEPP **200** and SEPP **126.**

In step **606,** e.g., after determining that rate limiting is to be performed, the 5GC request may be discarded. For example, SEPP **126** or RLM **304** therein may prevent a consumer NF from receiving a 5GC request that was forwarded by SEPP **200.**

It will be appreciated that Figure 6 is for illustrative purposes and that different and/or additional messages and/or actions may be used. It will also be appreciated that various messages and/or actions described herein may occur in a different order or sequence.

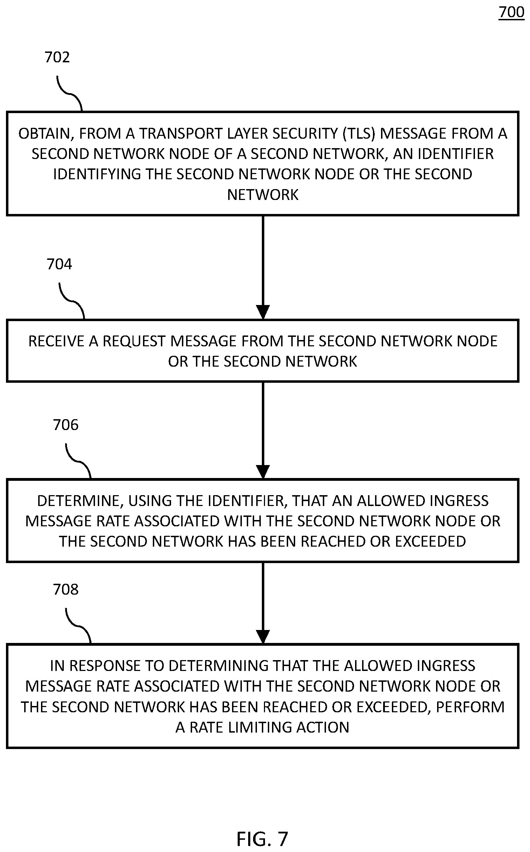

Figure 7 is a diagram illustrating an example process **700** for ingress message rate limiting. In some embodiments, example process **700** described herein, or portions thereof, may be performed at or performed by node **300,** RLM **304,** and/or another module or node.

Referring to example process **700,** aspects (e.g., processing steps or actions) may occur at a network node of a first network (e.g., SEPP **126** or node **300** comprising RLM **304** in a home 5GC network).

In step **702,** an identifier identifying a second network node or a second network may be obtained from a TLS message from the second network node of the second network. For example, SEPP **200** of the 'MNO-1' network may initiate a TLS handshake with SEPP **126** in a home network and, during the TLS handshake, may provide a TLS message containing a certificate with an identifier associated with SEPP **200.**

In some embodiments, obtaining an identifier from a TLS message may include obtaining the identifier from a certificate (e.g., an X.509v3 certificate) contained in the TLS message. For example, an X.509v3 certificate in a TLS message may include a subject field or a subject alternative name field that includes a FQDN associated with an identity of the sender. In this example, the FQDN may include or represent a network node identifier or a network identifier, e.g., the network identifier may be stored in a format like "5gc.mnc<MNC>.mcc<MCC>.3gppnetwork.org", where "<MNC>" and "<MCC>" fields correspond to the MNC and MCC of an operator's PLMN.

In step **704,** a request message may be received from the second network node or the second network. For example, after a TLS handshake, SEPP **200** of the 'MNO-1' network may forward one or more 5GC requests (e.g., from a producer NF) to SEPP **126** in a home network via an N32-f interface using a TLS protection mode.

In step **706,** it may be determined, using the identifier, that an allowed ingress message rate associated with the second network node or the second network has been reached or exceeded. For example, SEPP **126** may utilize an identifier associated with an initiating SEPP to determine whether the SEPP is reaching or exceeding an ingress message rate. In this example, SEPP **126** may query a data store or database that contains current ingress message rates and allowed message rates indexed by or associated with relevant identifiers (e.g., a PLMN identifier and/or a SEPP identifier).

In some embodiments, determining that an allowed ingress message rate associated with a second network node or a second network has been reached or exceeded may comprise obtaining the allowed ingress message rate associated with the second network node or the second network; obtaining a current ingress message rate associated with the second network node or the second network; and comparing the current ingress message rate and the allowed ingress message rate for determining that the current ingress message rate meets or exceeds the allowed ingress message rate.

In some embodiments, obtaining a current ingress message rate associated with a second network node or a second network may include tracking or deriving messages rates for a plurality of SEPPs in the second network to determine the current ingress rate associated with the second network. For example, assuming rate limiting is based on an originating network identifier, SEPP **126** may track ingress message rates across a plurality of N32-f interface connections and may combine ingress messages rates for a plurality of SEPPs associated with a same network identifier and may compare the combined ingress message rate associated with the network identifier to a predetermined allowed ingress message rate associated with the network identifier.

In step **708,** in response to determining that the allowed ingress message rate associated with the second network node or the second network has been reached or exceeded, a rate limiting action may be performed.

In some embodiments, a rate limiting action may include discarding a request message, generating or modifying a throttle rate for discarding a portion of messages, or notifying a network operator or a management system.

It will be appreciated that process **700** is for illustrative purposes and that different and/or additional actions may be used. It will also be appreciated that various actions described herein may occur in a different order or sequence.

It will be appreciated that while some aspects of the subject matter described herein has been discussed with reference to 5G networks various other networks may utilize some aspects of the subject matter described herein. For example, any network that utilize certificates that identify senders or related networks may use features, mechanisms and techniques described herein to perform more selective ingress message rate limiting, e.g., based on a source node or network.

It should be noted that node **300,** RLM **304,** and/or functionality described herein may constitute a special purpose computing device. Further, node **300,** RLM **304,** and/or functionality described herein can improve the technological field of network security and/or message rate limiting at a SEPP or other network node. For example, by performing ingress message rate limiting based on a network identifier and/or a node identifier, malicious activities (e.g., signaling traffic storms) and their negative consequences (e.g., network congestion, service failures, and/or poor user experience) can be mitigated and/or prevented.

### References:

1. IETF RFC 5246; The Transport Layer Security (TLS) Protocol, Version 1.2; August 2008.
2. IETF RFC 3280; Internet X.509 Public Key Infrastructure Certificate and Certificate Revocation List (CRL) Profile, April 2002.
3. 3GPP TS 23.003; 3rd Generation Partnership Project; Technical Specification Group Core Network and Terminals; Numbering, addressing and identification (Release 16), V16.4.0 (2020-09).
4. 3GPP TS 29.573; 3rd Generation Partnership Project; Technical Specification Group Core Network and Terminals; 5G System; Public Land Mobile Network (PLMN) Interconnection; Stage 3 (Release 16) V16.3.0 (2020-07).
5. 3GPP TS 33.501; 3rd Generation Partnership Project; Technical Specification Group Services and System Aspects; Security Architecture and Procedures for the 5G System; (Release 16), V16.3.0 (2020-07).
6. 3GPP TS 29.510; 3rd Generation Partnership Project; Technical Specification Group Core Network and Terminals; 5G System; Network Function Repository Services; Stage 3 (Release 16), V16.4.0 (2020-07).

Furthermore, the foregoing description is for the purpose of illustration only, and not for the purpose of limitation.

## Claims

1. A method (700) for ingress message rate limiting, the method comprising:
at a first network node (300) of a first network:
obtaining (702), from a transport layer security, TLS, message from a second network node of a second network, an identifier identifying the second network node or the second network;
receiving (704), on an N32-f interface connection, a request message from the second network node or the second network;
determining (706), using the identifier, that an allowed ingress message rate associated with the second network node or the second network has been reached or exceeded, wherein determining (706), using the identifier, that the allowed ingress message rate associated with the second network node or the second network has been exceeded includes querying a data store or database that contains current ingress message rates and allowed message rates associated with different network or node identifiers; and
in response to determining (706) that the allowed ingress message rate associated with the second network node or the second network has been reached or exceeded, performing (708) a rate limiting action.

2. The method (700) of claim 1 wherein obtaining the identifier from the TLS message includes obtaining the identifier from a certificate contained in the TLS message.

3. The method (700) of claim 2 wherein the certificate comprises an X.509 certificate.

4. The method (700) of claim 3 wherein obtaining (702) the identifier includes extracting a fully qualified domain name, FQDN, for the second network node from a subject field or a subject alternative name field of the X.509 certificate.

5. The method (700) of any preceding claim wherein determining (706) that the allowed ingress message rate associated with the second network node or the second network has been reached or exceeded comprises:
obtaining the allowed ingress message rate associated with the second network node or the second network;
obtaining a current ingress message rate associated with the second network node or the second network; and
comparing the current ingress message rate and the allowed ingress message rate for determining that the current ingress message rate meets or exceeds the allowed ingress message rate.

6. The method (700) of claim 5 wherein obtaining the current ingress message rate associated with the second network node or the second network includes tracking or deriving a combined messages rate for a plurality of security edge protection proxies, SEPPs, in the second network to determine the current ingress rate associated with the second network.

7. The method (700) of any preceding claim wherein the rate limiting action includes discarding the request message, generating or modifying a throttle rate for discarding a portion of ingress messages, or notifying a network operator or a management system.

8. A system for ingress message rate limiting, the system comprising:
a first network node (300) of a first network comprising:
at least one processor; and
a memory,
wherein the first network node (300) is configured for:
obtaining (702), from a transport layer security, TLS, message from a second network node of a second network, an identifier identifying the second network node or the second network;
receiving (704), on an N32-f interface connection, a request message from the second network node or the second network;
determining (706), using the identifier, that an allowed ingress message rate associated with the second network node or the second network has been reached or exceeded, wherein determining (706), using the identifier, that the allowed ingress message rate associated with the second network node or the second network has been exceeded includes querying a data store or database that contains current ingress message rates and allowed message rates associated with different network or node identifiers; and
in response to determining (706) that the allowed ingress message rate associated with the second network node or the second network has been reached or exceeded, performing (708) a rate limiting action.

9. The system of claim 8 wherein the first network node (400) is configured for obtaining the identifier from the TLS message by obtaining the identifier from a certificate contained in the TLS message.

10. The system of claim 9 wherein the certificate comprises an X.509 certificate.

11. The system of claim 10 wherein the first network node (300) is configured for extracting a fully qualified domain name, FQDN, for the second network node from a subject field or a subject alternative name field of the X.509 certificate.

12. The system of any one of claims 8 to 11 wherein the first network node (300) or the second network node includes a security edge protection proxy, SEPP, a 5G core network function, a network proxy, or a network gateway.

13. The system of any one of claims 8 to 12 wherein the first network node (300) is configured for:
obtaining the allowed ingress message rate associated with the second network node or the second network;
obtaining a current ingress message rate associated with the second network node or the second network; and
comparing the current ingress message rate and the allowed ingress message rate for determining that the current ingress message rate meets or exceeds the allowed ingress message rate.

14. The system of claim 13 wherein the first network node (300) is configured for tracking or deriving messages rates for a plurality of security edge protection proxies, SEPPs, in the second network to determine the current ingress rate associated with the second network.

15. A non-transitory computer readable medium having stored thereon executable instructions that when executed by a processor of a computer control the computer to perform steps comprising:
at a first network node (300) of a first network:
obtaining (702), from a transport layer security, TLS, message from a second network node of a second network, an identifier identifying the second network node or the second network;
receiving (704), on an N32-f interface connection, a request message from the second network node or the second network;
determining (706), using the identifier, that an allowed ingress message rate associated with the second network node or the second network has been reached or exceeded, wherein determining (706), using the identifier, that the allowed ingress message rate associated with the second network node or the second network has been exceeded includes querying a data store or database that contains current ingress message rates and allowed message rates associated with different network or node identifiers; and
in response to determining (706) that the allowed ingress message rate associated with the second network node or the second network has been reached or exceeded, performing (708) a rate limiting action.

## Patentansprüche

1. Verfahren (700) zur Begrenzung der Eingangsnachrichtenrate, wobei das Verfahren umfasst:
an einem ersten Netzwerkknoten (300) eines ersten Netzwerks:
Ermitteln (702) einer Kennung, die den zweiten Netzwerkknoten oder das zweite Netzwerk identifiziert, aus einer TLS- (Transport Layer Security) Nachricht von einem zweiten Netzwerkknoten eines zweiten Netzwerks;
Empfangen (704) einer Anforderungsnachricht von dem zweiten Netzwerkknoten oder von dem zweiten Netzwerk über eine N32-f-Schnittstellenverbindung;
Bestimmen (706), unter Verwendung der Kennung, dass eine dem zweiten Netzwerkknoten oder dem zweiten Netzwerk zugeordnete zulässige Eingangsnachrichtenrate erreicht oder überschritten wurde, wobei das Bestimmen (706), unter Verwendung der Kennung, dass die dem zweiten Netzwerkknoten oder dem zweiten Netzwerk zugeordnete zulässige Eingangsnachrichtenrate überschritten wurde, das Abfragen eines Datenspeichers oder einer Datenbank enthält, der bzw. die die aktuellen Eingangsnachrichtenraten und zulässigen Nachrichtenraten enthält, die verschiedenen Netzwerk- oder Knotenkennungen zugeordnet sind; und
als Reaktion auf das Bestimmen (706), dass die dem zweiten Netzwerkknoten oder dem zweiten Netzwerk zugeordnete zulässige Eingangsnachrichtenrate erreicht oder überschritten wurde, Durchführen (708) einer Ratenbegrenzungsmaßnahme.

2. Verfahren (700) nach Anspruch 1, wobei das Ermitteln der Kennung aus der TLS-Nachricht das Ermitteln der Kennung aus einem in der TLS-Nachricht enthaltenen Zertifikat umfasst.

3. Verfahren (700) nach Anspruch 2, wobei das Zertifikat ein X.509-Zertifikat umfasst.

4. Verfahren (700) nach Anspruch 3, wobei das Bestimmen (702) der Kennung das Enthalten eines vollqualifizierten Domänennamens (Fully Qualified Domain Name, FQDN) für den zweiten Netzwerkknoten aus einem Subject-Feld oder einem Subject-Alternative-Name-Feld des X.509-Zertifikats enthält.

5. Verfahren (700) nach einem der vorhergehenden Ansprüche, wobei das Bestimmen (706), dass die dem zweiten Netzwerkknoten oder dem zweiten Netzwerk zugeordnete zulässige Eingangsnachrichtenrate erreicht oder überschritten wurde, umfasst:
Ermitteln der zulässigen Eingangsnachrichtenrate, die dem zweiten Netzwerkknoten oder dem zweiten Netzwerk zugeordnet ist;
Ermitteln einer aktuellen Eingangsnachrichtenrate, die dem zweiten Netzwerkknoten oder dem zweiten Netzwerk zugeordnet ist; und
Vergleichen der aktuellen Eingangsnachrichtenrate mit der zulässigen Eingangsnachrichtenrate, um zu bestimmen, dass die aktuelle Eingangsnachrichtenrate die zulässige Eingangsnachrichtenrate erreicht oder überschreitet.

6. Verfahren (700) nach Anspruch 5, wobei das Ermitteln der aktuellen Eingangsnachrichtenrate, die dem zweiten Netzwerkknoten oder dem zweiten Netzwerk zugeordnet ist, das Verfolgen oder Ableiten einer kombinierten Nachrichtenrate für eine Vielzahl von Security Edge Protection Proxies (SEPPs) im zweiten Netzwerk enthält, um die dem zweiten Netzwerk zugeordnete aktuelle Eingangsrate zu bestimmen.

7. Verfahren (700) nach einem der vorhergehenden Ansprüche, wobei die Maßnahmen zur Ratenbegrenzung das Verwerfen der Anforderungsnachricht, das Erzeugen oder Ändern einer Drosselungsrate zum Verwerfen eines Teils der eingehenden Nachrichten oder das Benachrichtigen eines Netzwerkbetreibers oder eines Managementsystems enthalten.

8. System zur Begrenzung der Eingangsnachrichtenrate, wobei das System umfasst: einen ersten Netzwerkknoten (300) eines ersten Netzwerks, der umfasst:
mindestens einen Prozessor; und
einen Speicher,
wobei der erste Netzwerkknoten (300) für Folgendes konfiguriert ist:
Ermitteln (702) einer Kennung, die den zweiten Netzwerkknoten oder das zweite Netzwerk identifiziert, aus einer TLS-Nachricht von einem zweiten Netzwerkknoten eines zweiten Netzwerks;
Empfangen (704) einer Anforderungsnachricht von dem zweiten Netzwerkknoten oder von dem zweiten Netzwerk über eine N32-f-Schnittstellenverbindung;
Bestimmen (706), unter Verwendung der Kennung, dass eine dem zweiten Netzwerkknoten oder dem zweiten Netzwerk zugeordnete zulässige Eingangsnachrichtenrate erreicht oder überschritten wurde, wobei das Bestimmen (706), unter Verwendung der Kennung, dass die dem zweiten Netzwerkknoten oder dem zweiten Netzwerk zugeordnete zulässige Eingangsnachrichtenrate überschritten wurde, das Abfragen eines Datenspeichers oder einer Datenbank enthält, der bzw. die die aktuellen Eingangsnachrichtenraten und zulässigen Nachrichtenraten enthält, die verschiedenen Netzwerk- oder Knotenidentifikatoren zugeordnet sind; und
als Reaktion auf das Bestimmen (706), dass die dem zweiten Netzwerkknoten oder dem zweiten Netzwerk zugeordnete zulässige Eingangsnachrichtenrate erreicht oder überschritten wurde, Durchführen (708) einer Ratenbegrenzungsmaßnahme.

9. System nach Anspruch 8, wobei der erste Netzwerkknoten (400) so konfiguriert ist, dass er die Kennung aus der TLS-Nachricht erhält, indem er die Kennung aus einem in der TLS-Nachricht enthaltenen Zertifikat entnimmt.

10. System nach Anspruch 9, wobei das Zertifikat ein X.509-Zertifikat umfasst.

11. System nach Anspruch 10, wobei der erste Netzwerkknoten (300) so konfiguriert ist, dass er einen vollqualifizierten Domänennamen (FQDN) für den zweiten Netzwerkknoten aus einem Subject-Feld oder einem Subject Alternative Name-Feld des X.509-Zertifikats extrahiert.

12. System nach einem der Ansprüche 8 bis 11, wobei der erste Netzwerkknoten (300) oder der zweite Netzwerkknoten einen Security Edge Protection Proxy (SEPP), eine 5G-Kernnetzwerkfunktion, einen Netzwerk-Proxy oder ein Netzwerk-Gateway enthält.

13. System nach einem der Ansprüche 8 bis 12, wobei der erste Netzwerkknoten (300) für Folgendes konfiguriert ist:
Ermitteln der zulässigen Eingangsnachrichtenrate, die dem zweiten Netzwerkknoten oder dem zweiten Netzwerk zugeordnet ist;
Ermitteln einer aktuellen Eingangsnachrichtenrate, die dem zweiten Netzwerkknoten oder dem zweiten Netzwerk zugeordnet ist; und
Vergleichen der aktuellen Eingangsnachrichtenrate mit der zulässigen Eingangsnachrichtenrate, um zu bestimmen, dass die aktuelle Eingangsnachrichtenrate die zulässige Eingangsnachrichtenrate erreicht oder überschreitet.

14. System nach Anspruch 13, wobei der erste Netzwerkknoten (300) so konfiguriert ist, dass er Nachrichtenraten für eine Vielzahl von Security Edge Protection Proxies (SEPPs) im zweiten Netzwerk verfolgt oder ableitet, um die dem zweiten Netzwerk zugeordnete aktuelle Eingangsrate zu bestimmen.

15. Nicht-flüchtiges, computerlesbares Medium, auf dem ausführbare Befehle gespeichert sind, die, wenn sie von einem Prozessor eines Computers ausgeführt werden, den Computer veranlassen, Schritte durchzuführen, die Folgendes umfassen:
an einem ersten Netzwerkknoten (300) eines ersten Netzwerks:
Ermitteln (702) einer Kennung, die den zweiten Netzwerkknoten oder das zweite Netzwerk identifiziert, aus einer TLS-Nachricht von einem zweiten Netzwerkknoten eines zweiten Netzwerks;
Empfangen (704) einer Anforderungsnachricht von dem zweiten Netzwerkknoten oder von dem zweiten Netzwerk über eine N32-f-Schnittstellenverbindung;
Bestimmen (706), unter Verwendung der Kennung, dass eine dem zweiten Netzwerkknoten oder dem zweiten Netzwerk zugeordnete zulässige Eingangsnachrichtenrate erreicht oder überschritten wurde, wobei das Bestimmen (706), unter Verwendung der Kennung, dass die dem zweiten Netzwerkknoten oder dem zweiten Netzwerk zugeordnete zulässige Eingangsnachrichtenrate überschritten wurde, das Abfragen eines Datenspeichers oder einer Datenbank enthält, der bzw. die die aktuellen Eingangsnachrichtenraten und zulässigen Nachrichtenraten enthält, die verschiedenen Netzwerk- oder Knotenidentifikatoren zugeordnet sind; und
als Reaktion auf das Bestimmen (706), dass die dem zweiten Netzwerkknoten oder dem zweiten Netzwerk zugeordnete zulässige Eingangsnachrichtenrate erreicht oder überschritten wurde, Durchführen (708) einer Ratenbegrenzungsmaßnahme.

## Revendications

1. Procédé (700) servant à limiter le débit de messages d'entrée, le procédé comportant les étapes consistant à :
au niveau d'un premier nœud de réseau (300) d'un premier réseau :
obtenir (702), à partir d'un message TLS (transport layer security - sécurité de la couche de transport) en provenance d'un deuxième nœud de réseau d'un deuxième réseau, un identificateur qui identifie le deuxième nœud de réseau ou le deuxième réseau ;
recevoir (704), sur une connexion d'interface N32-f, un message de demande en provenance du deuxième nœud de réseau ou du deuxième réseau ;
déterminer (706), à l'aide de l'identificateur, comme quoi un débit de messages d'entrée autorisé qui est associé au deuxième nœud de réseau ou au deuxième réseau a été atteint ou a été dépassé, dans lequel l'étape consistant à déterminer (706), à l'aide de l'identificateur, comme quoi le débit de messages d'entrée autorisé qui est associé au deuxième nœud de réseau ou au deuxième réseau a été dépassé comprend l'étape consistant à interroger une mémoire de données ou une base de données qui contient les débits de messages d'entrée actuels et les débits de messages autorisés qui sont associés à différents identificateurs de réseaux ou de nœuds ; et
en réponse à l'étape consistant à déterminer (706) comme quoi le débit de messages d'entrée autorisé qui est associé au deuxième nœud de réseau ou au deuxième réseau a été atteint ou a été dépassé, effectuer (708) une action de limitation de débit.

2. Procédé (700) selon la revendication 1, dans lequel l'étape consistant à obtenir l'identificateur à partir du message TLS comprend l'étape consistant à obtenir l'identificateur à partir d'un certificat contenu dans le message TLS.

3. Procédé (700) selon la revendication 2, dans lequel le certificat comporte un certificat X.509.

4. Procédé (700) selon la revendication 3, dans lequel l'étape consistant à obtenir (702) l'identificateur comprend l'étape consistant à extraire un nom FQDN (fully qualified domain name - nom de domaine totalement qualifié) pour le deuxième nœud à partir d'un champ objet ou d'un champ de variante de nom objet du certificat X.509.

5. Procédé (700) selon l'une quelconque des revendications précédentes, dans lequel l'étape consistant à déterminer (706) comme quoi le débit de messages d'entrée autorisé qui est associé au deuxième nœud de réseau ou au deuxième réseau a été atteint ou a été dépassé comporte les étapes consistant à :
obtenir le débit de messages d'entrée autorisé qui est associé au deuxième nœud de réseau ou au deuxième réseau ;
obtenir un débit de messages d'entrée actuel qui est associé au deuxième nœud de réseau ou au deuxième réseau ; et
comparer le débit de messages d'entrée actuel et le débit de messages d'entrée autorisé pour déterminer comme quoi le débit de messages d'entrée actuel atteint ou dépasse le débit de messages d'entrée autorisé.

6. Procédé (700) selon la revendication 5, dans lequel l'étape consistant à obtenir le débit de messages d'entrée actuel qui est associé au deuxième nœud de réseau ou au deuxième réseau comprend l'étape consistant à suivre ou à dériver un débit de messages combiné pour une pluralité de mandataires SEPP (security edge protection proxies - mandataires de protection de bord de sécurité) dans le deuxième réseau pour déterminer le débit d'entrée actuel qui est associé au deuxième réseau.

7. Procédé (700) selon l'une quelconque des revendications précédentes, dans lequel l'action de limitation de débit comprend les étapes consistant à supprimer le message de demande, à générer ou modifier un débit d'étranglement pour supprimer une partie de messages d'entrée, ou à notifier un opérateur de réseau ou un système de gestion.

8. Système servant à limiter le débit de messages d'entrée, le système comportant :
un premier nœud de réseau (300) d'un premier réseau comportant :
au moins un processeur ; et
une mémoire,
dans lequel le premier nœud de réseau (300) est configuré pour :
obtenir (702), à partir d'un message TLS (transport layer security - sécurité de la couche de transport) en provenance d'un deuxième nœud de réseau d'un deuxième réseau, un identificateur qui identifie le deuxième nœud de réseau ou le deuxième réseau ;
recevoir (704), sur une connexion d'interface N32-f, un message de demande en provenance du deuxième nœud de réseau ou du deuxième réseau ;
déterminer (706), à l'aide de l'identificateur, comme quoi un débit de messages d'entrée autorisé qui est associé au deuxième nœud de réseau ou au deuxième réseau a été atteint ou a été dépassé, dans lequel l'étape consistant à déterminer (706), à l'aide de l'identificateur, comme quoi le débit de messages d'entrée autorisé qui est associé au deuxième nœud de réseau ou au deuxième réseau a été dépassé comprend l'étape consistant à interroger une mémoire de données ou une base de données qui contient les débits de messages d'entrée actuels et les débits de messages autorisés qui sont associés à différents identificateurs de réseaux ou de nœuds ; et
en réponse à l'étape consistant à déterminer (706) comme quoi le débit de messages d'entrée autorisé qui est associé au deuxième nœud de réseau ou au deuxième réseau a été atteint ou a été dépassé, effectuer (708) une action de limitation de débit.

9. Système selon la revendication 8, dans lequel le premier nœud de réseau (400) est configuré pour obtenir l'identificateur à partir du message TLS en obtenant l'identificateur à partir d'un certificat contenu dans le message TLS.

10. Système selon la revendication 9, dans lequel le certificat comporte un certificat X.509.

11. Système selon la revendication 10, dans lequel le premier nœud de réseau (300) est configuré pour extraire un nom FQDN (fully qualified domain name - nom de domaine totalement qualifié) pour le deuxième nœud de réseau à partir d'un champ objet ou d'un champ de variante de nom objet du certificat X.509.

12. Système selon l'une quelconque des revendications 8 à 11, dans lequel le premier nœud de réseau (300) ou le deuxième nœud de réseau comprend un mandataire SEPP (security edge protection proxy - mandataire de protection de bord de sécurité), une fonction de réseau central 5G, un mandataire de réseau ou une passerelle de réseau.

13. Système selon l'une quelconque des revendications 8 à 12, dans lequel le premier nœud de réseau (300) est configuré pour :
obtenir le débit de messages d'entrée autorisé qui est associé au deuxième nœud de réseau ou au deuxième réseau ;
obtenir un débit de messages d'entrée actuel qui est associé au deuxième nœud de réseau ou au deuxième réseau ; et
comparer le débit de messages d'entrée actuel et le débit de messages d'entrée autorisé pour déterminer comme quoi le débit de messages d'entrée actuel atteint ou dépasse le débit de messages d'entrée autorisé.

14. Système selon la revendication 13, dans lequel le premier nœud de réseau (300) est configuré pour suivre ou dériver des débits de messages pour une pluralité de mandataires SEPP (security edge protection proxies - mandataires de protection de bord de sécurité) dans le deuxième réseau pour déterminer le débit d'entrée actuel qui est associé au deuxième réseau.

15. Support non transitoire lisible par ordinateur ayant, stockées sur celui-ci, des instructions en mesure d'être exécutées qui, quand elles sont exécutées par un processeur d'un ordinateur, commandent l'ordinateur afin d'effectuer les étapes consistant à :
au niveau d'un premier nœud de réseau (300) d'un premier réseau :
obtenir (702), à partir d'un message TLS (transport layer security - sécurité de la couche de transport) en provenance d'un deuxième nœud de réseau d'un deuxième réseau, un identificateur qui identifie le deuxième nœud de réseau ou le deuxième réseau ;
recevoir (704), sur une connexion d'interface N32-f, un message de demande en provenance du deuxième nœud de réseau ou du deuxième réseau ;
déterminer (706), à l'aide de l'identificateur, comme quoi un débit de messages d'entrée autorisé qui est associé au deuxième nœud de réseau ou au deuxième réseau a été atteint ou a été dépassé, dans lequel l'étape consistant à déterminer (706), à l'aide de l'identificateur, comme quoi le débit de messages d'entrée autorisé qui est associé au deuxième nœud de réseau ou au deuxième réseau a été dépassé comprend l'étape consistant à interroger une mémoire de données ou une base de données qui contient les débits de messages d'entrée actuels et les débits de messages autorisés qui sont associés à différents identificateurs de réseaux ou de nœuds ; et
en réponse à l'étape consistant à déterminer (706) comme quoi le débit de messages d'entrée autorisé qui est associé au deuxième nœud de réseau ou au deuxième réseau a été atteint ou a été dépassé, effectuer (708) une action de limitation de débit.
